(19) Europäisches Patentamt
European Patent Office
Office européen des brevets

(11) Veröffentlichungsnummer: **0 002 733**
**A2**

(12) # EUROPÄISCHE PATENTANMELDUNG

(21) Anmeldenummer: **78101674.6**

(22) Anmeldetag: **14.12.78**

(51) Int. Cl.²: **C 07 F 9/28,** C 07 F 9/30, C 07 F 9/38, C 08 G 79/04

(30) Priorität: **29.12.77 DE 2758580**

(43) Veröffentlichungstag der Anmeldung: **11.07.79 Patentblatt 79/14**

(84) Benannte Vertragsstaaten: **BE CH DE FR GB IT NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Dürsch, Walter, Dr., In der Braubach 4, D-6240 Königstein/Taunus (DE)**
Erfinder: **Kleiner, Hans-Jerg, Dr., Altkönigstrasse 11a, D-6242 Kronberg/Taunus (DE)**

(54) **Verfahren zur Herstellung von Phosphin- und Phosponsäure-Anhydriden.**

(57) Verfahren zur Herstellung von Phosphin- und Phosphonsäureanhydriden der allgemeinen Formel

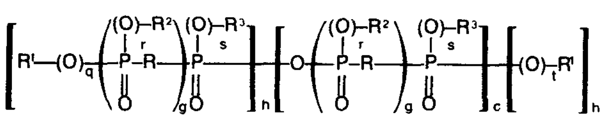

durch Umsetzung von Phosphin- und Phosphonsäuren der Formel

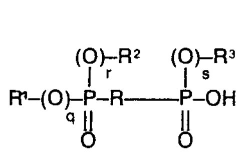

mit aliphatischen Carbonsäureanhydriden.

Diese Phosphin- und Phosphonsäureanhydride dienen als phosphororganische Zwischenprodukte insbesondere für die Herstellung von phosphororganischen Verbindungen mit flammhemmenden Eigenschaften.

EP 0 002 733 A2

HOECHST AKTIENGESELLSCHAFT HOE 77/F 261 Dr.OT/St

# Verfahren zur Herstellung von Phosphin- und Phosponsäure-Anhydriden

Es ist bereits bekannt, daß Phosphinsäureanhydride - ausgehend von freien Phosphinsäuren - durch Umsetzung mit anorganischen Säurechloriden, wie z.B. Phosgen oder Thionylchlorid, zugänglich sind (DT-OS 22 25 545). Dabei entstehen aber relativ große Mengen an Chlorwasserstoff, die umständlich absorbiert oder auf eine die Umwelt nicht belastende Art vernichtet werden müssen. Es besteht deshalb das Bedürfnis nach einem Verfahren, bei dem keine aggressiven gasförmigen Nebenprodukte auftreten.

Aus Bull.Soc.chim.France 6, S. 2232 und S. 2233 (jeweils Spalte 2 unten) ist ferner bekannt, daß sich aus Phosphonsäureanhydriden und Essigsäure die Pyro-Phosphonsäuren und Essigsäureanhydrid bilden.

Es mußte daher vermutet werden, daß die umgekehrte Reaktion, d.h. die Bildung von Phosphonsäureanhydriden mit Hilfe von Essigsäureanhydrid, undurchführbar ist.

Es wurde nun überraschenderweise ein Verfahren zur Herstellung von Phosphin- und Phosphonsäure-anhydriden gefunden, bei dem keine aggressiven gasförmigen Nebenprodukte entstehen, da - ausgehend von den freien Phosphin- und Phosphonsäuren - mit den bequem handhabbaren aliphatischen Carbonsäure-anhydriden gearbeitet werden kann.

Das erfindungsgemäße Verfahren ist dadurch gekennzeichnet, daß Phosphin- und Phosphonsäuren der Formel I

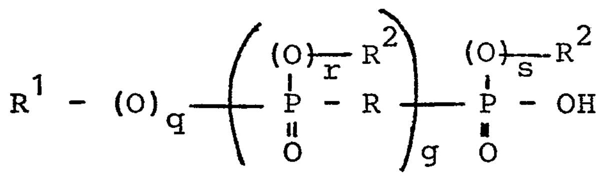 (I)

wobei

g, q und r jeweils 0 oder 1,

s, wenn g = 0 ist, 0 und wenn g = 1, 0 oder 1

R: $(C_1-C_{10})$-Alkylen, Cycloalkylen, Arylen, oder Aralkylen, vorzugsweise $(C_1-C_6)$-Alkylen, Phenylen oder p-Xylylen

$R^1$: für q = 1 Wasserstoff und für q = o gegebenenfalls ungesättigte und/oder verzweigte $(C_1-C_5)$-Alkylreste, die gegebenenfalls durch 1 oder 2 Chlor- oder Bromatome substituiert sein können, vorzugsweise $(C_1-C_3)$-Alkyl,

$R^2$: für r = 1 Wasserstoff und für r = o dasselbe wie $R^1$ für q = 0,

$R^3$: für s = 1 Wasserstoff und für s = 0 gegebenenfalls ungesättigte und/oder verzweigte Alkyl- oder Aralkylreste mit 1 - 22 Kohlenstoffatomen, die gegebenenfalls durch 1 oder 2 Chlor- oder Bromatome substituiert sein können, ferner Phenylreste, die gegebenenfalls durch 1 bis 5 Chlor- oder Bromatome substituiert sein können, oder auch die Gruppe

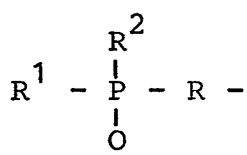

und bevorzugt $(C_1-C_3)$-Alkyl bedeuten,

mit aliphatischen Carbonsäureanhydriden der allgemeinen Formel II

$$R^4 - CO - O - CO - R^4 \qquad (II),$$

wobei $R^4$ $(C_1-C_3)$-Alkyl- oder $C_1$-Fluor- und/oder $-(C_1)$-Chloralkyl ist,

unter Entstehung der entsprechenden aliphatischen Carbonsäuren und Bildung von Phosphin- bzw. Phosphonsäure-

Anhydriden der allgemeinen Formel III

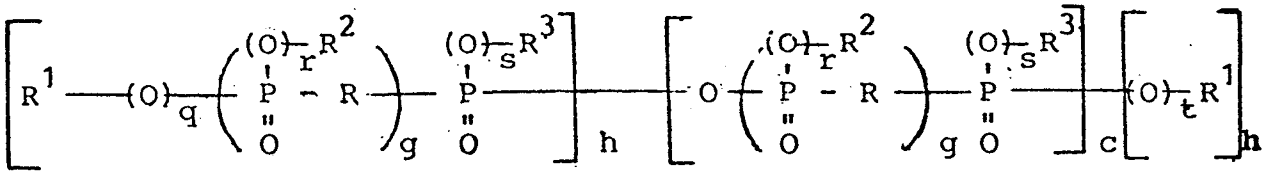

wobei zusätzlich

h für q, r, s und t jeweils = 0 stets 1 und für alle anderen Fälle 0 oder 1

t 0 oder 1

c für h = 1 und für q, r, s, t jeweils = 0 stets 1 und für alle anderen Fälle 1 bis 1200, bevorzugt (im Mittel) 1,5 - 20 bedeuten,

miteinander umgesetzt werden.

Als Ausgangsmaterial kommen folgende Klassen von Phosphin- und Phosphonsäuren der Formel I in Frage:

| Nr. | Verbindungsklasse<br>Bezeichnung und Formel | g | q | r | s | $R^1$ | $R^2$ | $R^3$ |
|---|---|---|---|---|---|---|---|---|
| I/1 | Mono-phosphinsäuren<br>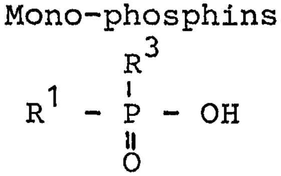 | 0 | 0 | - | 0 | nicht H | - | nicht H |
| I/2 | Phosphinoxido-phosphin-säuren<br>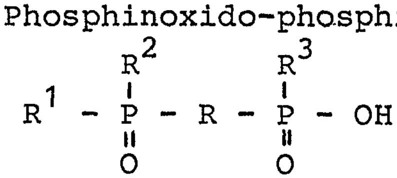 | 1 | 0 | 0 | 0 | nicht H | nicht H | nicht H |
| I/3 | Bis-(alkyl-phosphinsäuren)<br>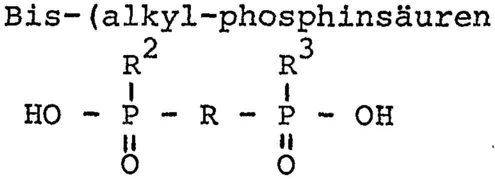 | 1 | 1 | 0 | 0 | H | nicht H | nicht H |
| I/4 | Phosphinoxido-phosphon-säuren<br>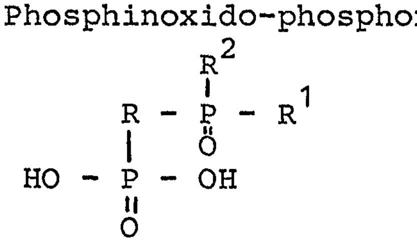 | 1 | 1 | - | 0 | H | - | nicht H |
| I/5 | Phosphino-phosphon-säuren<br>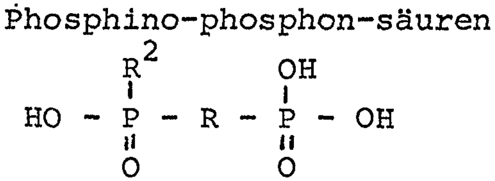 | 1 | 1 | 0 | 1 | H | nicht H | H |

| Nr. | Verbindungsklasse<br>Bezeichnung und Formel | g | q r s | $R^1$ | $R^2$ | $R^3$ |
|---|---|---|---|---|---|---|
| I/6 | Di-Phosphonsäuren<br>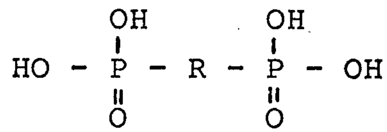 | 1 | 1 1 1 | H | H | H |
| I/7 | Mono-phosphonsäuren<br>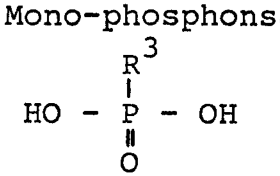 | 0 | 1 - 0 | H | - | nicht H |

Bevorzugt sind die Klassen I/3 (Bis-(alkyl-phosphinsäuren)) und I/6 (Di-phosphonsäuren). Besonders bevorzugt ist - wegen der einfachen und sehr preisgünstigen Zugänglichkeit - die Klasse I/7 (Mono-phosphonsäuren).

Im einzelnen kommen als Phosphin- und Phosphonsäuren der Formel I in Frage:

1. Von Verbindungsklasse I/1 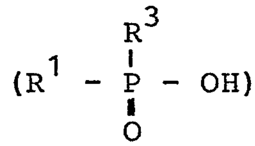 :

z.B. Dodecyl-methyl-phosphinsäure, Octyl-äthyl-phosphinsäure, Benzyl-n-propyl-phosphinsäure, Chlormethylmethyl-phosphinsäure, und bevorzugt Dimethyl-, Methyl-äthyl- oder Methylpropyl-phosphinsäure, etc.

2. Von Verbindungklasse I/2 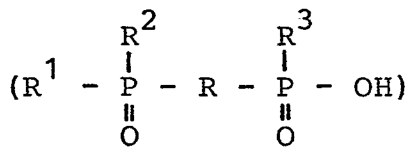 :

(3-Diäthyl-phosphinoxido-propyl-) äthyl-phosphinsäure, (2-Dimethyl-phosphinoxido-äthyl-)methyl-phosphinsäure, (Dimethyl-phosphinoxido-methyl-)methyl-phosphinsäure, etc.

3. Von Verbindungsklasse I/3 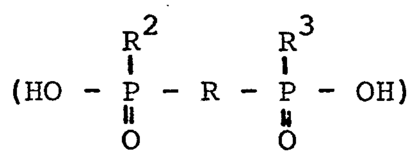 :

1,10-Decan-bis-(methyl-phosphinsäure),
1,6-Hexan-bis-(äthyl-phosphinsäure),
1,4 Butan-bis-(methyl-phosphinsäure),
1,3-Propan-bis-(methyl-phosphinsäure),
p-Xylylen-bis-(methyl-phosphinsäure), etc.
und bevorzugt
1,2-Äthan-bis-(methyl-phosphinsäure) bzw. Methan-bis-(methyl-phosphinsäure).

4. Von Verbindungsklasse I/4 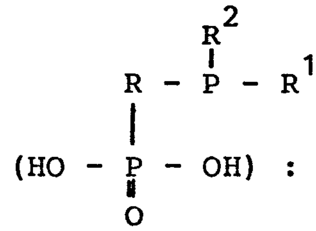 :

3-(Di-methyl-phosphinoxido-)propan-phosphonsäure,
2-(Di-äthyl-phosphinoxido-)äthan-phosphonsäure,
2-(Di-methyl-phosphinoxido-)methan-phosphonsäure,
etc.

5. Von Verbindungsklasse I/5 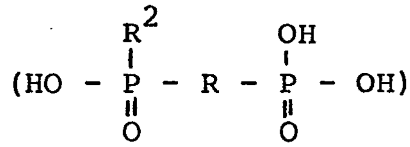 :

3-(Methyl-phosphino-)propan-phosphonsäure,
2-(Butyl-phosphino-)äthan-phosphonsäure,
(Methyl-phosphino-)methan-phosphonsäure, etc.

6. Von Verbindungsklasse I/6 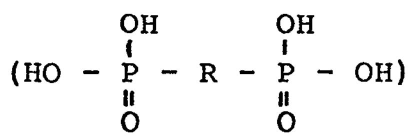 :

1,6-Hexan-di-phosphonsäure,
1,4-Phenylen-di-phosphonsäure,
1,4-Butan-di-phosphonsäure,
1,3-Propan-di-phosphonsäure etc.
und bevorzugt
Methan-di-phosphonsäure und Äthan-di-phosphonsäure.

7. Von Verbindungsklasse I/7 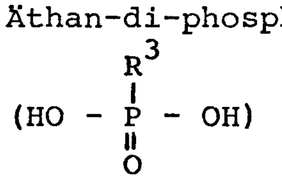 (die von allen 7 Klassen besonders bevorzugt ist):

n-Octadecan-phosphonsäure, n-Tetradecan-phosphonsäure,
n-Dodecan-phosphonsäure, Iso-nonan-phosphonsäure,
n-Octan-phosphonsäure, 2-Äthyl-hexan-phosphon-säure,
n-Hexan-phosphonsäure, n-Butan-phosphonsäure,
Iso-butan-phosphonsäure, Allyl-phosphonsäure,
Vinyl-phosphonsäure, Cyclohexan-phosphonsäure,
Chlor-methan-phosphonsäure,
2,3-Dibrom-propan-phosphonsäure, 1-Brom-vinyl-phosphonsäure, Phenyl-phosphonsäure, Benzyl-phosphonsäure,

2-Phenyl-äthyl-phosphonsäure, Iso-nonyl-phenyl-phosphonsäure, 4-Chlor-phenyl-phosphonsäure, 2,4,6-Trichlor-phenyl-phosphonsäure, 4-Brom-phenyl-phosphonsäure,
2,4,6-Tribrom-phenyl-phosphonsäure,
Penta-brom-phenyl-phosphonsäure, etc.
und besonders bevorzugt Methyl-phosphonsäure, Äthyl-phosphonsäure und n-Propyl-phosphonsäure.

An aliphatischen Carbonsäure-anhydriden der Formel II kommen in Betracht:
Chloressigsäure-, Trichloressigsäure-, Trifluoressigsäure-anhydrid, n-Buttersäure-anhydrid, Iso-buttersäure-anhydrid, bevorzugt Propionsäure-anhydrid und besonders bevorzugt - wegen des günstigen Preises und des niedrigen Siedepunkts - Essigsäure-anhydrid.

Die Mol-Verhältnisse zwischen den Phosphin- und Phosphonsäuren der Formel I und den aliphatischen Carbonsäure-anhydriden der Formel II liegen zwischen 1 : ca. 0,5 und 1:10, vorzugsweise 1:0,7 und 1:4. Bei Anwendung von Phosphonsäuren mit 3 bzw. 4 sauren Hydroxyl-Gruppen pro Molekül, wie sie bei den Klassen I/5 (Phosphino-phosphonsäure) bzw. I/6 (Di-phosphonsäure) vorliegen, muß berücksichtigt werden, daß es bei Anwendung von mehr als einem Mol der Carbonsäure-anhydride II pro Mol Verbindungen von den Klassen I/5 und I/6 zu Vernetzungen bzw. Harzbildungen im Reaktionsgemäß kommen kann.

Das gewählte Mol-Verhältnis hat in allen anderen Fällen erheblichen Einfluß auf den Gehalt an Phosphin- bzw. Phosphonsäure-Anhydrid-Strukturen. Dieser Anhydrid-Gehalt ist formal durch den Index c in der allgemeinen Formel III für die Endprodukte III ausdrückbar. Die Zahlenwerte für c und damit auch die Verhältnisse zwischen Anhydrid- und Säure-Anhydrid-Äquivalenten, aus denen man sich die Reaktionsprodukte III aufgebaut denken kann, sind umso größer je größer die Mol-Verhältnisse zwischen den Carbonsäure-

anhydriden II und den Phosphin- bzw. Phosphonsäuren I sind.

Die Reaktionspartner können bei Raumtemperatur miteinander vermischt und gemeinsam bei Normaldruck oder im Vakuum hochgeheizt werden. Dabei destillieren die entstehenden Carbonsäuren ab. Diese Methode empfiehlt sich vor allem bei hochschmelzenden Verbindungen I mit zwei Phosphoratomen im Molekül, wie z.B. bei Bis-alkyl-phosphinsäuren und Di-phosphonsäuren. Die Carbonsäure-Anhydride II dienen hierbei auch als Lösungsmittel. Es können aber auch entweder die Carbonsäure-Anhydride II oder die Phosphin- bzw. Phosphon-Säuren I vorgelegt und die jeweils anderen Reaktionspartner bei der Reaktionstemperatur zugetropft werden.

Die Reaktionstemperaturen liegen bei 30 - 200°C, bevorzugt 90 - 170°C. Bei Verwendung von Essigsäureanhydrid ist es zweckmäßig, 150°C nicht zu überschreiten, um eventuelle Dunkelfärbungen der Reaktionsprodukte zu vermeiden. Oberhalb 140°C bildet sich besonders gegen Ende der Reaktion in geringen Mengen Aceton als Nebenprodukt, das vermutlich seinerseits - unter Bildung von dunkelgefärbten Kondensaten - mit sich selbst weiter reagiert. Bei der Verwendung von z.B. Propionsäure-anhydrid treten dagegen auch über 150°C Verfärbungen kaum auf. Das gleiche gilt auch z.B. für Chloressigsäure-anhydrid.

Die Reaktionszeiten liegen zwischen 10 Minuten und 20 Stunden, bevorzugt 1 bis 4 Stunden.

Gemäß einer - wegen höherer Raum-Zeit-Ausbeuten - bevorzugten Ausführungsform werden die Phosphin- bzw. Phosphonsäuren bei ca. 140° - 150°C vorgelegt, 0,8 - 1,4 Mole des besonders preisgünstigen und niedrig siedenden Essigsäure-Anhydrid in ca. 2 - 4 Stunden zugetropft und die entstehende Essigsäure - gegebenenfalls über eine Kolonne - sofort - zunächst bei Normaldruck, später im Vakuum - abdestilliert. Nach den gebildeten Carbonsäuren müssen auch die höher siedenden Überschüsse an Carbonsäure-anhydriden destillativ, bevorzugt im Vakuum bei 1 - 50 Torr, entfernt werden. Auch dabei sollten, um starke Verfärbungen zu vermeiden, Innentemperaturen von ca. 170°C möglichst nicht überschritten werden.

Inerte Lösungs- bzw. Verdünnungsmittel, z.B. Toluol, Xylol, Chlorbenzol etc., können angewandt werden. Sie sind jedoch meist überflüssig. Wenn der Anhydrisierungseffekt bei einmaliger Behandlung der Verbindungen I mit den Carbonsäure-anhydriden II nicht ausreichend ist, kann das Verfahren - gegebenenfalls sogar öfters - wiederholt werden. Dadurch ist es möglich, sich der Stufe der reinen Anhydride immer mehr anzunähern.

Für die Weiterverwendung der Produkte der Formel III genügt es jedoch in den meisten Fällen, wenn noch Restgehalte von ca. 5 - 45 % an freien Phosphin- bzw. Phosphon-säuren vorhanden sind.

Die Phosphin- und Phosphonsäure-anhydride der Formel III sind wertvolle Zwischenprodukte für zahlreiche Phosphonorganika. Insbesondere eignen sich diese Produkte als Ausgangsverbindungen zur Herstellung von Phosphor enthaltenden Polyaddukten, wie sie in der deutschen Patentanmeldung P 27 26 478.4 beschrieben sind. Diese Phosphor enthaltenden Polyaddukte wiederum können mit reaktiven Vernetzungsmitteln auf Textilmaterial fixiert werden. Die so erhaltene Ausrüstung zeigt sehr gute flammhemmende Eigenschaften. Dunkelgefärbte Produkte der Formel III sind stets dann gut brauchbar, wenn ihre Eigenfarbe nicht stört und sie beispielsweise in destillierbare Folgeprodukte überführt werden.

Vorbemerkungen zu den Beispielen

Die in den Tabellen der Beispiele 1 und 2 angegebenen Zahlenwerte sind - im Interesse einer besseren Übersicht -

auf jeweils 1 Mol einer Phosphin- bzw. Phosphonsäure I umgerechnet.

Der Protonengehalt der Reaktionsprodukte III wurde zweckmäßigerweise in "Mol-% freie Säure" ausgedrückt. Die "Mol-% Anhydrid" in III können daraus sehr leicht aus der Bezeichnung Mol-%-Anhydrid = 100 Mol-% -Mol-% freie Säure errechnet werden. Der Index c in der allgemeinen Formel I, der die Anzahl der Anhydrid-Äquivalente pro Mol der Verbindungen III ausdrückt, ergibt sich sehr einfach aus dem Quotienten der Mol-Prozente Anhydrid und der Mol-Prozente freie Säure gemäß

$$c = \frac{\text{Mol-\% Anhydrid}}{\text{Mol-\% freie Säure}}$$

Die erzielten Auswaagen liegen in den Fällen, in denen Verfärbungen auftreten, höher als den analytisch gefundenen Gehalten an freier Säure entspricht. Dies ist auf die Anwesenheit von relativ geringen Mengen (maximal ca. 7 %) an harzartigen Substanzen zurückzuführen. Sie beeinträchtigen nur wenig den Praxis-Wert der Reaktionsprodukte III. Sie hinterbleiben z.B. bei der Weiterverarbeitung der Reaktions-Produkte III zu destillierbaren Phosphin- bzw. Phosphonsäure-Derivaten im Destillations-Rückstand.

Die "Mol-% freie Säure" lassen sich sehr einfach aus den Integral-Linien der NMR-Spektren quantitativ bestimmen. Die Summe der Säure-Protonen der Reaktionsprodukte III erscheint im Bereich von 10 - 15 ppm (je nach Konzentration der Probe). Die Signale der $-CH_2-$ bzw. $-CH_2-\overset{O}{\overset{\|}{P}}-$ Gruppen treten dagegen z.B. im Bereich von 1,8 - 3,5 ppm, die der $CH_3$-Gruppe im Bereich von 0,8 - 1,3 ppm auf.

Für die Aufnahme der NMR-Spektren wurden jeweils 20 mg Substanz in 0,5 ml $CDCl_3$ oder $(CD_3)_2SO$ eingesetzt. Die Meßtemperatur lag bei 32°C.

Aus dem Integral der Säureprotonen wurde der Anteil z.B. der aliphatischen Protonen, die aus den freien Säuren stammen, nach bekannten Methoden berechnet. Die Mol-Prozent an freien Säuren ergaben sich aus dem Quotienten der aliphatischen Protonen, die den freien Säuren zugeordnet werden müssen und dem Gesamtintegral aller aliphatischen Protonen.

Beispiel 1

Die angegebenen Phosphin- bzw. Phosphonsäuren I werden jeweils bei Raumtemperatur mit den angegebenen Molen an Essigsäureanhydrid (Ega) (pro Mol I) gemischt. Dann wird unter Rückfluß erhitzt und die Essigsäure und das überschüssige Essigsäureanhydrid im Vakuum abdestilliert und noch 2 Stunden bei der angegebenen End-Temperatur und dem End-Vakuum nacherhitzt.

Tabelle zu Beispiel 1:

| | Phosphin- bzw. Phosphonsäuren I (jeweils 1 Mol) | Mol Ega pro Mol I | Rückflußzeit (Std.) | Abdest. Druck (Torr) | End-Temp. (°C) | End-Vakuum (Torr) | 1 Mol von I (g) | Gewicht von III (g) | Mol-% freie Säure in III | C (=Anhydrid-Äquiv. pro Mol III | Aussehen |
|---|---|---|---|---|---|---|---|---|---|---|---|
| a | $CH_3 - \overset{O}{\overset{\|}{P}} (-OH)_2$ | 1,0 | 1,5 | 60 | 160 | 1,5 | 96 | 83 | 32 | 2,13 | brauner Sirup |
| b | $C_6H_5-C_2H_4-\overset{O}{\overset{\|}{P}}(-OH)_2$ | 2,0 | 2,0 | 50 | 180 | 20 | 186 | 172 | 21 | 3,76 | braun, glasartig |
| c | $(HO-)_2\overset{O}{\overset{\|}{P}}-C_4H_8-\overset{O}{\overset{\|}{P}}(-OH)_2$ | 0,9 | 1,0 | 60 | 160 | 30 | 218 | 200 | 50 (Seiten-Funkt.) | formal unendl. | braun, glasartig |
| d | $HO - \overset{O}{\overset{\|}{P}}(CH_3) - C_2H_4 - \overset{O}{\overset{\|}{P}}(CH_3) - OH$ | 1,5 | 1,0 | 100 | 175 | 38 | 186 | 168 | 11 | 8,80 | gelb, glasartig |
| e | $(CH_3)_2 - \overset{O}{\overset{\|}{P}} - CH_2 - \overset{O}{\overset{\|}{P}} (-OH)_2$ | 4,0 | 1,0 | 130 | 165 | 15 | 172 | 160 | 30 | 2,34 | gelb, glasartig |
| f | $C_3H_7- \overset{O}{\overset{\|}{P}} (-OH)_z$ | 10,0 | 2,5 | 280 | 150 | 22 | 124 | 110 | 4 | 24,00 | braun, zäh |

Beispiel 2

Es wurden jeweils die Phosphin- bzw. Phosphonsäuren I bei der Zugabe-Temperatur vorgelegt und die angegebene Molzahl Essigsäureanhydrid (Ega) (pro Mol I) innerhalb der Zugabezeit zugetropft. Dabei destilliert bereits - wenn ca. ein Viertel von II zugegeben ist - die entstehende Essigsäure in den meisten Fällen bei Normaldruck ab. Bei 2f, 2k und 2l wird leichtes Vakuum angelegt. Nach Ende der Zugabe werden der Überschuß an Carbonsäure-anhydriden im Vakuum abdestilliert und 2 Stunden lang die angegebene End-Temperatur und das angegebene Endvakuum eingehalten.

Tabelle zu Beispiel 2:

| | Phosphin- bzw. Phosphonsäure I | Mol Ega pro Mol | Zugabe-Zeit (Std.) | Zugabe-Temp. (°C) | End-Temp. (°C) | End-Vakuum (Torr) | 1 Mol von I (g) | Gewicht von III (g) | Mol-% freie Säure in III | C (=Anhydrid Äquiv. pro Mol III) | Berechnungsindex $n_D^{20}$ | Aussehen |
|---|---|---|---|---|---|---|---|---|---|---|---|---|
| a | $C_3H_7-\overset{O}{\overset{\|}{P}}(-OH)_2$ | 0,8 | 3,5 | 145 | 150 | 40 | 124 | 115,0 | 44 | 1,27 | 1,4645 | gelbes Öl |
| b | " | 0,8 | 3,0 | 150 | 150 | 40 | 124 | 114,8 | 39 | 1,56 | 1,4650 | gelbes Öl |
| c | " | 0,8 | 3,0 | 150 | 150 | 50 | 124 | 114,1 | 34 | 1,94 | 1,4658 | gelbes Öl |
| d | " | 0,8 | 3,0 | 148 | 155 | 27 | 124 | 114,8 | 37 | 1,70 | 1,4651 | gelbes Öl |
| e | " | 1,0 | 3,0 | 155 | 155 | 40 | 124 | 113,7 | 29 | 2,45 | 1,4661 | gelbes Öl |
| f | " | 0,8 | 4,0 | 100 | 140 | 60 | 124 | 114,9 | 42 | 1,38 | 1,4646 | gelbes Öl |
| g | " | 1,0 | 3,5 | 165 | 170 | 50 | 124 | 114,8 | 31 | 2,22 | 1,4660 | braunes Öl |
| h | " | 1,5 | 4,0 | 170 | 160 | 17 | 124 | 116,0 | 18 | 4,56 | zu dunkel | dunkel-braunes Öl |
| i | " | 2,0 | 4,5 | 170 | 160 | 19 | 124 | 117,0 | 17 | 4,88 | zu dunkel | dunkel-braunes Öl |
| j | $C_{14}H_{29}-\overset{O}{\overset{\|}{P}}(-OH)_2$ | 2,0 | 1,0 | 165 | 160 | 35 | 278 | 258,5 | 0 | formal unendlich | - | gelb, glasartig |

Tabelle 2 zu Beispiel 2:

| | Phosphin- bzw. Phosphonsäure I | Mol Ega pro Mol | Zugabe-Zeit (Std.) | Zugabe-Temp. (°C) | End-Temp. (°C) | End-Vakuum (Torr) | 1 Mol von I (g) | Gewicht von III (g) | Mol-% freie Säure in III | C (=Anhydrid Äquiv. pro Mol III) | Berechnungsindex $n_D^{20}$ | Aussehen |
|---|---|---|---|---|---|---|---|---|---|---|---|---|
| k | $CH_2 = CH-\overset{O}{\overset{\|}{P}}(-OH)_2$ | 1,0 | 3,0 | 120 | 120 | 30 | 108 | 97,5 | 46 | 1,17 | - | gelbes Öl |
| l | $ClCH_2 - \overset{O}{\overset{\|}{P}}(- OH)_2$ | 1,5 | 3,0 | 120 | 120 | 15 | 130 | 123 | 50 | 1,0 | zu dunkel | dunkelbraunes Öl |
| m | $HO-\underset{CH_3}{\overset{O}{\overset{\|}{P}}}-C_{10}H_{20}-\underset{CH_3}{\overset{O}{\overset{\|}{P}}}-OH$ | 1,6 | 4,0 | 155 | 160 | 28 | 298 | 288 | 16 | 5,25 | - | gelb glasartig |

Beispiel 3

204 g (2 Mol) Essigsäureanhydrid werden auf 140°C erhitzt und innerhalb von 3 Stunden 124 g (1 Mol) Propanphosphonsäure zugetropft. Dabei destillieren 141 g überwiegend Essigsäure ab. Nach Ende der Zugabe werden ein Vakuum von 100 bis (am Schluß) 18 Torr angelegt und bei 155°C weitere 70 g eines Gemischs aus Essigsäure und Essigsäureanhydrid ab destilliert.

Es hinterbleiben 114 g eines braunen Öls von Brechnungsindex $n_D^{20} = 1{,}4705$ und einem Restsäure-Gehalt von 17 Mol-%.

Beispiel 4

124 g (1 Mol) Propanphosphonsäure werden auf 160°C erhitzt und innerhalb von 30 Minuten 130 g (1 Mol) Propionsäureanhydrid zugetropft. Dabei destilliert bereits Propionsäure ab. Es wird zunächst Wasserstrahl-Vakuum (ca. 50 Torr) und dann Ölpumpen-Vakuum angelegt (0,1 Torr) angelegt und die entstandene Propionsäure und das überschüssige Propionsäureanhydrid quantitativ abdestilliert. Es verbleiben 114 g eines gelben Rückstands, der noch 33 Mol-% freie Propanphosphonsäure enthält.

Der Rückstand wird noch zwei Mal in gleicher Weise behandelt. Der zweite Rückstand enthält noch 16 Mol-% und der dritte Rückstand noch 13 Mol-% an freie Propanphosphonsäure.

Beispiel 5

108 g (1 Mol) Methyl-äthyl-phosphinsäure und 408 g (4 Mol) Essigsäureanhydrid werden 2 Stunden unter Rückfluß erhitzt. Dann werden die entstandene Essigsäure und das überschüssige Essigsäureanhydrid abdestilliert und 4 Stunden bei 25 Torr und 150°C nacherhitzt. Es resultieren 99 g von - gemäß NMR-Spektrum - praktisch reinem Methyl-äthylphosphinsäureanhydrid.

Der Berechnungsindex liegt bei $n_D^{20}$ = 1,4668.

Beispiel 6

124 g (1 Mol) Propanphosphonsäure und 342 g (2 Mol) Chloressigsäureanhydrid werden 90 Minuten auf 150°C erhitzt. Anschließend werden die gebildete Chloressigsäure und das überschüssige Chloressigsäureanhydrid bei Temperaturen bis zu 160°C zunächst bei 18 Torr, dann bei 1 Torr vollständig abdestilliert. Als Rückstand verbleibt ein nur schwach gelb gefärbtes Öl, das - gemäß NMR-Spektrum - nur noch 32 Mol-% an freier Säure enthält.

BAD ORIGINAL

Patentansprüche:

1. Verfahren zur Herstellung von Phosphin- und Phosphonsäureanhydriden der allgemeinen Formel

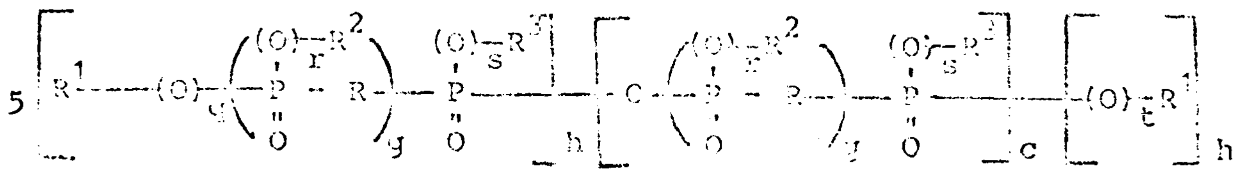

dadurch gekennzeichnet, daß man Phosphin- und Phosphonsäuren der Formel

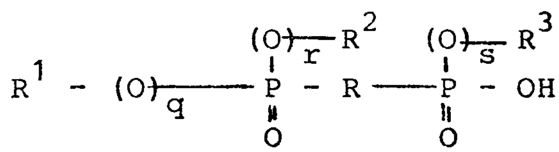

mit aliphatischen Carbonsäureanhydriden der allgemeinen Formel

$$R^4 - CO - O - CO - R^4$$

umsetzt,

wobei

g, q und r jeweils 0 oder 1,

s, wenn g = 0 ist, 0 und wenn g = 1,0 oder 1,

h für q, r, s und t jeweils = 0 stets 1 und für alle anderen Fälle 0 oder 1

t 0 oder 1

c für h = 1 und für 1, r, s, t jeweils = 0 stets 1 und für alle anderen Fälle 1 bis 1200, bevorzugt (im Mittel) 1,5 - 20 bedeuten,

R $(C_1-C_{10})$-Alkylen, Cycloalkylen, Arylen oder Aralkylen, vorzugsweise $(C_1-C_6)$-Alkylen, Phenylen oder P-Xylylen,

$R^1$ für q = 1 Wasserstoff und für q = 0 gegebenenfalls ungesättigte und/oder verzweigte $(C_1-C_5)$-Alkylreste, die gegebenenfalls durch 1 oder 2 Chlor- oder Bromatome substituiert sein können,

vorzugsweise $(C_1-C_3)$-Alkyl,

$R^2$ für r = 1 Wasserstoff und für r = 0 dasselbe wie $R^1$ für q = 0,

$R^3$ für s = 1 Wasserstoff und für s = 0 gegebenenfalls ungesättigte und/oder verzweigte Alkyl- oder Aralkylreste mit 1 - 22 Kohlenstoffatomen, die gegebenenfalls durch 1 oder 2 Chlor- oder Bromatome substituiert sein können, ferner Phenylreste, die gegebenenfalls durch 1 bis 5 Chlor- oder Bromatome substituiert sein können, oder auch die Gruppe 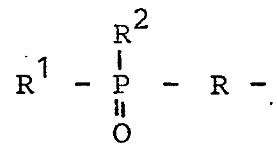

und bevorzugt $(C_1-C_3)$-Alkyl, und

$R^4$ $(C_1-C_3)$-Alkyl oder $C_1$-Fluoralkyl und/oder $C_1$-Chloralkyl bedeutet.

2. Verfahren nach Anspruch 1, dadurch gekennzeichnet, daß man Bis-phosphinsäuren der allgemeinen Formel

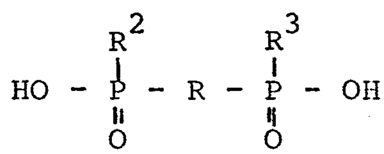

mit Carbonsäureanhydriden der allgemeinen Formel

$$R^4 - CO - O - CO - R^4$$

umsetzt, wobei $R^2$, $R^3$ und $R^4$ die in Anspruch 1 angegebenen Bedeutungen haben.

3. Verfahren nach Anspruch 1, dadurch gekennzeichnet, daß man Monophosphonsäuren der allgemeinen Formel

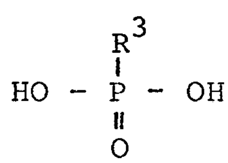

mit Carbonsäureanhydriden der allgemeinen Formel

$$R^4 - CO - O - CO - R^4$$

umsetzt, wobei $R^4$ die in Anspruch 1 angegebenen Bedeutungen hat und $R^3$ $(C_1-C_3)$-Alkyl bedeutet.

4. Verfahren nach Anspruch 1, dadurch gekennzeichnet, daß man als Carbonsäureanhydrid Essigsäureanhydrid verwendet.